# EUROPEAN PATENT SPECIFICATION

(11) **EP 0 650 877 B1**
(45) Date of publication and mention of the grant of the patent: **18.03.1998**
(21) Application number: 94202871.3
(22) Date of filing: 04.10.1994
(51) Int. Cl.: B60T 8/24

(54) **Braking system typically for tractors**
Bremssystem typisch für Traktoren
Système de freinage typique pour tracteurs

(30) Priority: 02.11.1993 IT RE930078
(43) Date of publication of application: 03.05.1995
(73) Proprietor: LANDINI SpA, I-42042 Fabbrico (Emilia) (IT)
(72) Inventor: Benassi, Claudio, I-41037 Mirandola (Modena) (IT); Roccatello, Umberto, I-42042 Fabbrico (Reggio Emilia) (IT)
(74) Representative: Corradini, Corrado

(56) References cited:
- US-A- 3 932 002
- US-A- 4 140 201

## Description

This invention relates to a braking system which is particularly but not exclusively suitable for tractors.

These latter are known to comprise a frame mounted on four wheels, of which the front wheels are steered wheels and the rear wheels are provided with respective hydraulically operated brake units.

In particular, said two brake units are provided with separate hydraulic circuits, they being operated by two separate brake pedals.

This is to facilitate the manoeuvring of the tractor around bends, particularly on fields.

In this respect, on operating the brake of that rear wheel internal to the bend the tractor tends to rotate about the wheel which is at that moment braked.

With the brake pedals there is associated a U-piece by which these latter can be connected together to form a single brake pedal, ie able to control both brake units.

This U-piece is normally disengaged during the use of the tractor on fields for the aforesaid reasons, and is engaged when the tractor is transferred to the road.

However it can happen, and indeed has happened, that the tractor driver forgets to engage the U-piece when travelling on the road.

Consequently when braking, only a single brake pedal is frequently pressed, with the result that the tractor tends to rotate about the rear wheel which is braked at that moment.

It should be noted that this can result in situations of serious danger, especially if the tractor is travelling at a certain speed.

Basically in such situations the tractor tends to move towards the edge of the road or towards the opposite lane depending on which pedal is pressed.

The main object of the present invention is to provide a braking system particularly for tractors which is able to obviate the aforesaid within the context of a simple and rational construction.

In US-A-3 932 002, an apparatus for automative vehicles is disclosed, for controlling the liquid pressure of a hydraulic braking system connected to the master cylinder of a single brake pedal. However this apparatus is for preventing undesired locking of the inside wheels in a braking action during a turning. Furthermore, the apparatus plays reducing the braking force upon the inside wheels.

The idea on which the invention is based is to make the braking of the one or other rear wheel dependent on the position of the front steered wheels.

According to the invention, in the system concerned the two brakes are operated by a single pedal, along the hydraulic circuits of said two brakes there being interposed respective devices for excluding the operation of the one or other rear brake, and which are sensitive to the position of the steered wheels such that when these latter are in a substantially neutral configuration both brakes are operated, whereas when they are orientated beyond a certain steering angle that brake is operated which pertains to that rear wheel internal to the bend.

The aforesaid system attains all the objects of the invention.

In this respect, the provision of a single brake pedal, in combination with said devices sensitive to the position of the steered wheels, eliminates the danger situations mentioned in the introduction as any error or forgetfulness of the tractor driver is precluded.

In addition the presence of a single brake pedal makes driving the tractor more simple and comfortable, particularly on fields.

In particular, said devices preferably consist of valve units, such as solenoid valves interposed along said hydraulic braking circuits, and are connected to respective members for sensing the position of the steering unit.

For example said members consist of known electromagnetic or mechanical sensors which can be associated either with the hubs of the steered wheels or with other parts of the steering unit.

According to a subordinate embodiment, the braking system of the invention is provided with means for excluding said sensors when the tractor exceeds a predetermined speed, this being particularly convenient when the tractor confronts a descending bend or a bend at a fairly high speed.

In this respect, if in such situations the wheel internal to the bend is braked rather suddenly in the initially described embodiment, a sudden increase in the steered effect occurs, with the risk of the tractor finishing off the road.

In contrast, the automatic exclusion of said sensors on exceeding a determined speed means that both brakes can be operated even if the tractor is on a bend, so overcoming the risk of the tractor finishing off the road.

For example, said exclusion means can consist of switches interposed along the wires connecting the solenoid valves to the steering sensors, and controlled by a speed sensor.

The characteristics and constructional merits of the invention will be apparent from the detailed description given hereinafter with reference to the accompanying figures, which show two preferred embodiments by way of non-limiting example.

Figure 1 is a schematic diagram showing a first embodiment of the invention.

Figure 2 shows part of the schematic diagram of Figure 1, illustrating a subordinate embodiment of the invention.

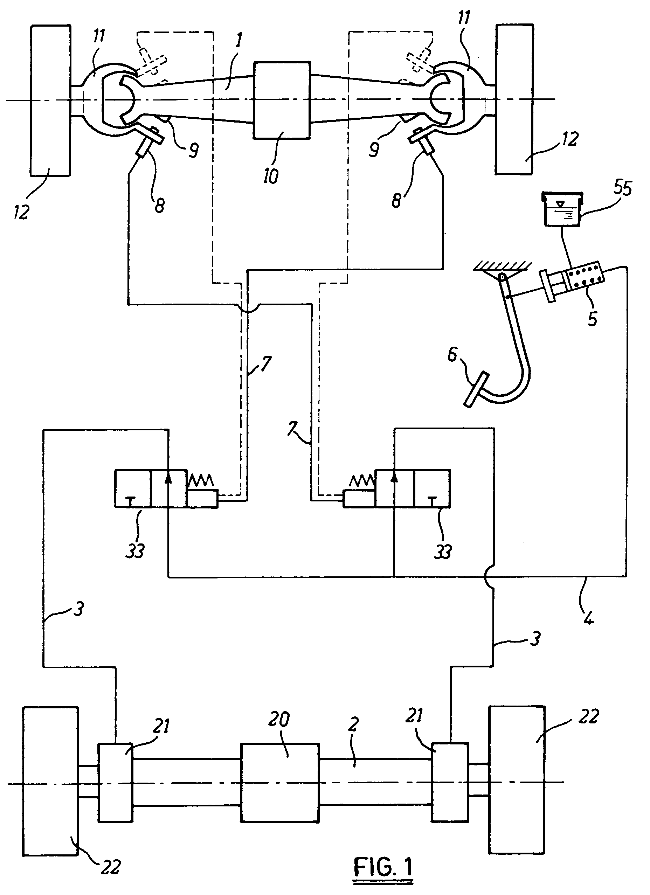

Said figures, and in particular Figure 1, show the front axle 1 and rear axle 2 of a tractor, which are provided with respective differential devices 10 and 20.

The hubs of the front wheels 12, with which a steering unit, not shown, is associated, are articulatedly connected to the front axle 1 by suitable articulation devices 11.

The rear axle 2 is fitted with the rear wheels 22 which are provided with respective hydraulically operated brake units 21.

Two pipes 3 intercepted by respective solenoid valves 33 extend from said brake units 21 to be connected to a common service pipe 4.

The common service pipe 4 is connected to the master cylinder 5 of a brake pedal 6 which operates both the brake units 21, as will be apparent hereinafter.

The hydraulic reservoir for said master cylinder 5 is indicated by 55, the reference numeral 7 indicating two wires connecting said solenoid valves 33 to two sensors 8 positioned behind the articulation devices 11 in front of two conjugate members 9 fixed to the axle 1.

The solenoid valve 33 of the right brake unit 21 is connected to the left sensor 8, while the solenoid valve 33 associated with the left brake unit 21 is connected to the right sensor 8.

The purpose of said sensors 8, which can consist of electromagnetic sensors, switches or other equivalent means, is to sense the position of the front wheels 12.

The arrangement of said sensors 8 can be different from that shown.

This is illustrated by thin dashed lines in Figure 1, with the steering signal being obtainable in another manner, as described below.

For example the sensors 8 can be positioned in front of the axle 1, in an inverted arrangement to that shown.

The aforedescribed system operates as follows.

When the tractor travels in a straight line or with the wheels steered to less than a certain angle the solenoid valves 33 are in their open state as shown in Figure 1, so that both the brakes 21 are operated on braking.

When the tractor travels on a bend with the front wheels 12 for example steered to the right beyond a certain steering angle, the right sensor 8 feeds a signal to the left solenoid valve 33, which closes.

Consequently only that wheel 22 internal to the bend, ie the right wheel, is braked on braking, while the left wheel is free to rotate.

In the same manner, when the front wheels 12 are steered to the left beyond a certain steering angle, the left rear wheel 22 is braked on braking, while the right wheel remains free.

In all cases when the front wheels 12 return to the substantially neutral position, the solenoid valve which was previously closed again opens.

At this point it should be noted that the signal provided for closing the solenoid valve 33 associated with the wheel 22 external to the bend can be derived from any point of the steering unit.

For example the steering measurement can be effected within the tractor power steering system.

Basically, the closure signal for the solenoid valves 33 can be derived from a number of characteristic elements of the power steering system, such as the overpressure at the end of steering, the position of the pistons of the hydraulic steering units, etc.

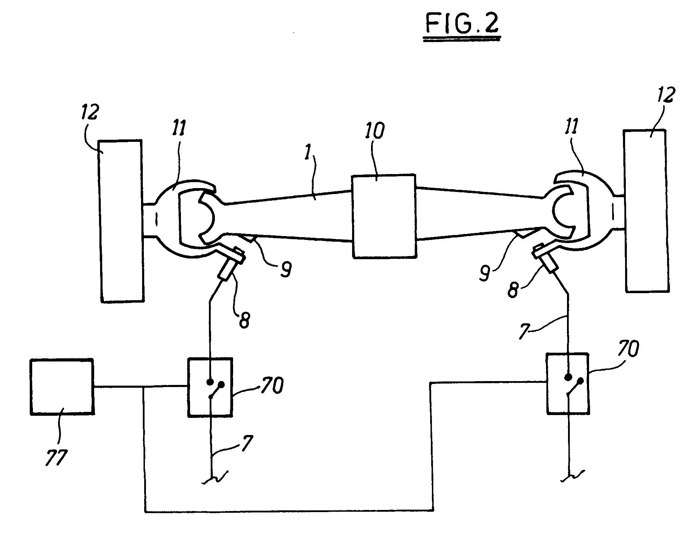

The embodiment shown in Figure 2 differs from the aforegoing in that along the wires 7 there are interposed means 70 for disconnecting said wires 7 when the tractor exceeds a predetermined speed.

This is for the reasons stated in the introduction.

In the illustrated embodiment said means 70 consist of switches under the control of a known speed sensor 77. This latter is set to a speed which depends on the tractor characteristics and performance, such that below said set speed the switches remain closed, whereas above this speed they open with simultaneous exclusion or deactivation of the sensors 8, so that the solenoid valves 33 both remain open.

The merits and advantages of the invention are clearly apparent from the aforegoing and from an examination of the accompanying figures.

The invention is not limited to that which is illustrated and described, but comprises all the technical equivalents of the invention and their combinations, if implemented within the context of the following claims.

## Claims

1. A braking system tipically for tractors comprising two front steering wheels (12) and at least two braking rear wheels (22) which are provide with two hydraulically operated indipendent brake units (21), the hydraulic circuits (3) of said brake units (21) being connected to the master cylinder (5) of a single brake pedal (6), characterized in that
the hydraulic circuits (3) of said brake units (21) are provided with respective devices (33) which are sensitive to the angular position of the steered wheels such
that when the steered wheels are in a substantially neutral configuration, both said brake units are activated, whereas when the steered wheels are in a steered configuration exceeding a certain angle, only the brake unit pertaining to that rear wheel internal to the bend is activated.

2. A system as claimed in claim 1, characterized in that said devices (33) each consist of a valve unit interposed along the respective hydraulic circuit and arranged to open and close in response to a substantially neutral configuration and a steering configuration of the steered wheels respectively.

3. A system as claimed in claim 2, characterized in that said valve unit consists of a solenoid valve.

4. A system as claimed in claim 3, characterized in that between each solenoid valve and the steered wheel control system there is interposed a sensor (8) for sensing the position of this latter.

5. A system as claimed in claims 3 and 4, characterized in that the connection between each solenoid valve and the respective sensor (8) is intercepted by means (70) arranged to exclude this latter when the tractor exceeds a predetermined speed.

6. A system as claimed in claim 5, characterized in that said means (70) consist of a switch under the control of a speed sensor (77).

## Patentansprüche

1. Bremssystem typisch für Traktoren, der zwei gelenkte Vorderräder (12) und mindestens zwei gebremste Hinterräder (22) aufweist, welche mit zwei unabhängigen, hydraulisch betriebenen Bremseinheiten (21) versehen sind, wobei die Hydraulikkreise (3) der Bremseinheiten (21) mit dem Hauptzylinder (5) eines einzelnen Bremspedals (6) verbunden sind,
**dadurch gekennzeichnet,** daß
die Hydraulikkreise (3) der Bremseinheiten (21) mit entsprechenden Einrichtungen (33) versehen sind, welche die Winkellage der gelenkten Räder aufnehmen können, so daß wenn die gelenkten Räder sich in einer im wesentlichen neutralen Stellung befinden die Bremseinheiten aktiviert werden, wohingegen wenn die gelenkten Räder sich in einer gelenkten Stellung befinden, die einen bestimmten Winkel überschreitet, nur diejenige Bremseinheit aktiviert wird, die zu demjenigen Hinterrad gehört, das sich in der Innenseite der Kurve befindet.

2. System nach Anspruch 1,
**dadurch gekennzeichnet,** daß
jede der Einrichtungen (33) aus einer Ventileinheit besteht, die entlang des entsprechenden Hydraulikkreises angeordnet ist und dafür vorgesehen ist, zu öffnen und zu schließen, und zwar jeweils als Antwort auf eine im wesentlichen neutrale Stellung und eine gelenkte Stellung der gelenkten Räder.

3. System nach Anspruch 2,
**dadurch gekennzeichnet,** daß
die Ventileinheit aus einem Solenoidventil besteht.

4. System nach Anspruch 3,
**dadurch gekennzeichnet,** daß
zwischen jedem Solenoidventil und dem Steuersystem für das gelenkte Rad ein Sensor (8) zum Aufnehmen der Position des letzteren angeordnet ist.

5. System nach Anspruch 3 und 4,
**dadurch gekennzeichnet,** daß
die Verbindung zwischen jedem Solenoidventil und dem entsprechenden Sensor (8) durch eine Einrichtung (70) unterbrochen bzw. abgeschnitten ist, die dafür vorgesehen ist, das letztere auszuschließen, wenn der Traktor eine voreingestellte Geschwindigkeit überschreitet.

6. System nach Anspruch 5,
**dadurch gekennzeichnet,** daß
die Einrichtung (70) aus einem Schalter unter der Steuerung eines Geschwindigkeitssensors (77) besteht.

## Revendications

1. Système de freinage typiquement pour tracteurs comprenant deux roues avant directionnelles (12) et au moins deux roues arrière de freinage (22) qui comportent des ensembles (21) de frein actionnés hydrauliquement de façon indépendante, les circuits hydrauliques (3) desdits ensembles de frein (21) étant reliés au maître cylindre (5) d'une pédale de frein unique (6), caractérisé en ce que :
les circuits hydrauliques (3) desdits ensembles de frein (21) comportent des dispositifs respectifs (33) qui sont sensibles à la position angulaire des roues directionnelles de telle façon que
lorsque les roues directionnelles sont dans une configuration sensiblement neutre, les deux ensembles de frein sont actionnés ensemble, tandis que lorsque les roues directionnelles sont dans une configuration de braquage dépassant un certain angle, seul l'ensemble de frein appartenant à la roue arrière interne à la courbe est actionné.

2. Système selon la revendication 1, caractérisé en ce que lesdits dispositifs (33) sont constitués chacun d'un organe de soupape interposé le long du circuit hydraulique respectif et disposé de façon à s'ouvrir et se fermer en réponse à une configuration sensiblement neutre et à une configuration de braquage des roues directionnelles, respectivement.

3. Système selon la revendication 2, caractérisée en ce que lesdits organes de soupape sont constitués par des soupapes à électro-aimant.

4. Système selon la revendication 3, caractérisé en ce que entre chaque soupape à électro-aimant et le système de commande des roues directionnelles est interposé un capteur (8) détectant la position de ce dernier.

5. Système selon les revendications 3 et 4, caractérisé en ce que la connexion entre chaque soupape à électro-aimant et le capteur respectif est interceptée par des moyens (70) disposés de façon à exclure ce dernier lorsque le tracteur dépasse une vitesse prédéterminée.

6. Système selon la revendication 5, caractérisé en ce que lesdits moyens (70) sont constitués par un commutateur commandé par le détecteur (77) de vitesse.
